# EUROPÄISCHE PATENTSCHRIFT

(11) **EP 1 763 937 B1**
(45) Veröffentlichungstag und Bekanntmachung des Hinweises auf die Patenterteilung: **13.02.2008**
(21) Anmeldenummer: 05747677.2
(22) Anmeldetag: 18.05.2005
(51) Int. Cl.: H04L 12/24

(54) **VERFAHREN ZUR GESICHERTEN DATENÜBERTRAGUNG IN EINEM MANAGEMENTSYSTEM**
METHOD FOR SECURE DATA TRANSMISSION IN A MANAGEMENT SYSTEM
PROCEDE POUR TRANSMETTRE DES DONNEES DE FAÇON SECURISEE DANS UN SYSTEME DE GESTION

(30) Priorität: 02.07.2004 DE 102004032208
(43) Veröffentlichungstag der Anmeldung: 21.03.2007
(73) Patentinhaber: Nokia Siemens Networks GmbH & Co. KG, 81541 München (DE)
(72) Erfinder: HIRSCH, Lucian, 81373 München (DE)
(86) Internationale Anmeldenummer: PCT/EP2005/052286
(87) Internationale Veröffentlichungsnummer: WO 2006/003055

(56) Entgegenhaltungen:
- EP-A- 1 231 739
- US-A- 6 092 109
- US-B1- 6 728 688

## Beschreibung

Die Erfindung betrifft ein Verfahren zum Betreiben eines Managementnetzes, bei welchem ein Agent vor Versendung einer Nachricht prüft, an welchen oder welche Manager einer Mehrzahl an Managern die Nachricht zu versenden ist. Weiterhin betrifft die Erfindung einen Agenten und einen Manager zur Durchführung des Verfahrens.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Einrichtungen bzw. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Nachrichten bzw. Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Ressourcen des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystem (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Üblicherweise werden im so genannten "unconfirmed mode" Ereignismeldungen von einem Agenten an einen Manager gesendet, ohne dass eine Bestätigungs-Nachricht über den korrekten Empfang der Ereignismeldung von dem Manager zurückgesendet wird. Dies führt zu einer Reduzierung an zu versendenden Nachrichten und somit zu einer Steigerung der Leistungsfähigkeit des Managementnetzes. Wenn jedoch die Kommunikation zwischen dem Agenten und dem Manager gestört ist, können Nachrichten, welche vom Agenten an den Manager versendet werden, verloren gehen, bevor der Manager sie empfängt. Wenn keine Bestätigungs-Nachrichten versendet werden, bleibt dieser Verlust unentdeckt. Dies resultiert darin, dass dem Manager für die Erfüllung seiner Managementaufgaben nötige Informationen fehlen, wodurch die Leistungsfähigkeit des Managers sinkt.

Die Publikation US6.092.109 offenbart ein Verfahren zum Betreiben eines Managementnetzes, umfassend einen Agenten, welcher Nachrichten an einen Manager versendet, wobei der Agent der Nachricht vor der Versendung einen Zähler hinzufügt, welcher vom Agenten von Nachricht zu Nachricht, welche von dem Agenten an den Manager zu versenden ist, geändert wird.

Der Erfindung liegt die Aufgabe zugrunde, ein Verfahren zum Betreiben eines Managementnetzes aufzuzeigen, welches eine gesicherte Nachrichtenübertragung zwischen Agent und Manager ermöglicht, ohne dass Bestätigungs-Nachrichten versendet werden. Weiterhin sollen ein geeigneter Manager und Agent zur Durchführung des Verfahrens vorgestellt werden.

Diese Aufgabe wird gelöst durch ein verfahren mit den Merkmalen des Patentanspruches 1 und durch einen Manager und einen Agenten mit Merkmalen von nebengeordneten Ansprüchen. Vorteilhafte Ausgestaltungen und Weiterbildungen sind Gegenstand von unteransprüchen.

Bei dem erfindungsgemäßen Verfahren zum Betreiben eines Managementnetzes prüft der Agent vor der Versendung einer Nachricht, an welchen oder welche Manager einer Mehrzahl an Managern die Nachricht zu versenden ist. Erfindungsgemäß fügt der Agent der Nachricht vor der Versendung für jeden Manager der Mehrzahl an Managern, an welche die Nachricht zu versenden ist, einen für den jeweiligen Manager spezifischen Zähler hinzu, welcher vom Agenten von Nachricht zu Nachricht, welcher von dem Agenten an den jeweiligen Manager zu versenden ist, geändert wird.

Der managerspezifische Zähler wird vom Agenten von Nachricht zu Nachricht geändert, wobei es sich bei dieser Änderung insbesondere eine regelmäßige Veränderung, dass heißt, eine Veränderung nach einer bestimmten Regel, handeln kann. Vorteilhaft ist es, wenn der Manager diese Regel kennt. Die Veränderung des Zählers von Nachricht zu Nachricht kann sich in Bezug auf einen oder auf alle Manager der Mehrzahl an Managern auf einen bestimmten Typ von Nachrichten beziehen bzw. beschränken, so ist es zum Beispiel möglich, dass für einen bestimmten Manager der Mehrzahl an Managern der Zähler nur für Nachrichten vom Typ Alarm verwendet bzw. verändert wird. Der Zähler kann insbesondere dazu verwendet werden, dass der Manager, welcher seinen managerspezifischen Zähler ausliest, anhand des Zählers erkennen kann, ob er alle Nachrichten einer Reihe von Nachrichten, welche vom Agenten an den Manager versendet wurden und welche den Zähler aufweisen, empfangen hat.

Der Agent fügt der Nachricht einen managerspezifischen Zähler für jeden Manager der Mehrzahl an Managern hinzu, an welchen die Nachricht versendet wird. Betrifft die Nachricht mehrere Manager, so werden ihr vom Agenten somit mehrere Zähler, welche jeweils spezifisch für verschiedene Manager sind, hinzugefügt. Neben der Mehrzahl an Managern, in Bezug auf welche der Agent in dem Fall, dass die Nachricht an sie versendet werden soll, jeweils den managerspezifischen Zähler hinzufügt, können weitere Manager vorhanden sein, an welche der Agent Nachrichten versendet, ohne hierfür einen managerspezifischen Zähler einzusetzen. So können zum Beispiel zwei Manager existieren, in Bezug auf welche der Agent das erfindungsgemäße Verfahren durchführt, und ein Manager, für den der Agent zwar jeweils prüft, ob eine Nachricht auch an diesen gesendet werden soll, jedoch keinen managerspezifischen Zähler für diesen verwendet. Das erfindungsgemäße Verfahren kann somit auf alle oder auch nur auf einen Teil der Manager, an welche ein Agent Nachrichten versendet, angewandt werden. Weiterhin kann das erfindungsgemäße Verfahren auf alle oder auch nur auf bestimmten Typ der vom Agenten zu versendenden Nachrichten angewandt werden.

In Weiterbildung der Erfindung handelt es sich bei dem Zähler um eine ganze Zahl, welche von Nachricht zu Nachricht, welche von dem Agenten an den jeweiligen Manager zu versenden ist, um den Wert 1 erhöht wird. Insbesondere kann der Zähler die Anzahl an seit einem bestimmten Zeitpunkt von dem Agent an den jeweiligen Manager gesendeten Nachrichten angeben. Insbesondere kann sich hierbei um Nachrichten eines bestimmten Typs handeln, deren Anzahl durch den Zähler nummeriert wird.

In Weiterbildung der Erfindung vergleicht ein Manager der Mehrzahl an Managern, welcher die Nachricht mit dem für diesen Manager spezifischen Zähler empfängt, diesen Zähler mit einem zuvor empfangenen für diesen Manager spezifischen Zähler, insbesondere mit dem Zähler der zuletzt vom Agenten empfangenen Nachricht. Vorteilhafterweise wird dieser Verfahrensschritt von allen Managern, für welche der Agent einen managerspezifischen Zähler verwendet, durchgeführt. Von Vorteil ist es, wenn der Manager auf den vergleich des Zählers hin mindestens eine vom Agenten zuvor versendete und vom Manager nicht empfangene Nachricht vom Agenten anfordert. Bei dieser Anforderung kann insbesondere Bezug genommen werden auf den Zähler der nicht empfangenen Nachricht, so dass die fehlende Nachricht vom Agenten identifiziert werden kann.

Einer Ausgestaltung der Erfindung gemäß wird der Zähler der Nachricht in Kombination mit Identifikationsinformationen des jeweiligen Managers hinzugefügt. So kann die Nachricht zum Beispiel eines oder mehrere Wertepaare enthalten, welche jeweils aus den Identifikationsinformationen eines Managers und dem jeweiligen managerspezifischen Zähler bestehen. Der Vorteil hierbei ist, dass jeder Manager anhand der Identifikationsinformationen erkennen kann, welcher Zähler ihn betrifft. Alternativ oder zusätzlich hierzu ist es auch möglich, dass der jeweilige Zähler der Nachricht an einer bestimmten Position innerhalb der Nachricht hinzugefügt wird, so dass der jeweilige Manager an der Position erkennen kann, welcher Zähler ihn betrifft.

Der erfindungsgemäße Agent zum Versenden von Nachrichten an eine Mehrzahl von Managern eines Managementnetzes weist Mittel auf zum Prüfen vor der Versendung einer Nachricht, an welchen oder welche Manager der Mehrzahl an Managern die Nachricht zu versenden ist. Weiterhin umfasst der erfindungsgemäße Agent Mittel zum Hinzufügen für jeden Manager der Mehrzahl an Managern, an welchen die Nachricht zu versenden ist, eines für den jeweiligen Manager spezifischen Zählers vor der Versendung der Nachricht, und Mittel zum Ändern des Zählers von Nachricht zu Nachricht, welche von dem Agenten an den jeweiligen Manager zu versenden ist.

Der erfindungsgemäße Manager für ein Managementnetz weist Mittel zum Empfangen einer Nachricht von einem Agenten auf. Erfindungsgemäß umfasst er weiterhin Mittel zum Auslesen eines Zählers aus der empfangenen Nachricht, und Mittel zum vergleichen des Zählers mit einem zuvor in einer Nachricht von dem Agenten empfangenen Zähler. Weiterhin kann der erfindungsgemäße Manager Mittel zum Anfordern von mindestens einer nicht vom Manager empfangenen Nachricht vom Agenten auf den vergleich der Zähler hin aufweisen.

Sowohl der erfindungsgemäße Manager als auch der erfindungsgemäße Agent dienen insbesondere zur Durchführung des erfindungsgemäßen Verfahrens, wobei dies auch auf die Ausgestaltungen und Weiterbildungen zutrifft. Hierzu können sie weitere geeignete Mittel aufweisen.

Im folgenden wird die Erfindung anhand eines Ausführungsbeispiels näher erläutert. Dabei zeigen:
- Figur 1:: eine Ausschnitt aus einem Managementnetz,
- Figur 2:: die Versendung von Nachrichten gemäß der Erfindung.

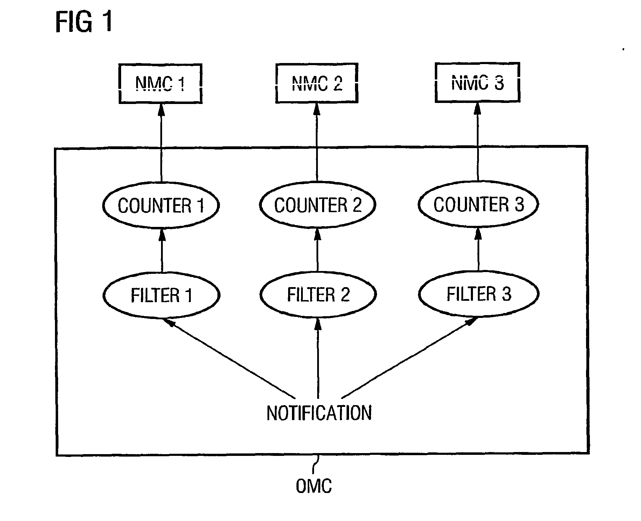

Die Erfindung wird nachfolgend Bezug nehmend auf ein Mobilfunkkommunikationssystem beschrieben. Figur 1 zeigt einen Ausschnitt aus einem Managementnetz eines solchen Mobilfunkkommunikationssystems mit einer Multi-Manager Konfiguration. Die drei NMCs NMC1, NMC2 und NMC3 (NMC: Network Managment Center) sind als Manager an ein OMC OMC (OMC: Operation and Maintenance Center), welches gegenüber den NMCs NMC1, NMC2 und NMC3 als Agent fungiert, angeschlossen. Das OMC OMC sendet Nachrichten bzw. Notifications NOTIFICATION in Form von Ereignismeldungen an die NMCs NMC1, NMC2 und NMC3, wobei die Notifications NOTIFICATION in der Regel von dem OMC OMC untergeordneten Agenten, d.h. von NEs (NE: Network Element), wie z.B. von Basisstationen, empfangen wurden. Hierzu existiert im OMC OMC eine in Figur 1 nicht dargestellte so genannte "Mapping function", welche eine empfangene Ereignismeldung in eine andere Notification gemäß dem Objektmodell der Schnittstelle zwischen dem OMC OMC und dem jeweiligen NMC umwandelt und anschließend an die Filter FILTER1, FILTER2 und FILTER3 weiterleitet, deren Funktion im Folgenden erläutert wird.

Jedes der drei NMCs NMC1, NMC2 und NMC3 kann eine spezifische Managementaufgabe übernehmen. Dies hat zur Folge, dass jedes der drei NMCs NMC1, NMC2 und NMC3 üblicherweise nur eine Teilmenge der von dem OMC OMC zu versendenden Notifications NOTIFICATION zur Auswertung benötigt. Dies bedeutet, dass von dem OMC OMC nur die für den jeweiligen Manager NMC1, NMC2 und NMC3 relevanten Notifications NOTIFICATION weitergeleitet werden sollen. Unter Normalbedingungen, d.h. wenn die Kommunikation zwischen dem OMC OMC als Agent und einem NMC NMC1, NMC2 oder NMC3 als Manager ordnungsgemäß funktioniert, wird dies über einen im OMC OMC vorhandenen Filtermechanismus, beispielsweise bei einer CMIP-basierten Management-Schnittstelle unter Verwendung von sogenannten EFDs, Event Forwarding Discriminators, gemäß ITU T X.734 "System Management: Event Report Management Function", realisiert. Die Aufgabe eines Filters ist es, durch entsprechende Tests nur diejenigen Notifications NOTIFICATION zu einem Manager weiterzuleiten, welche bestimmen Kriterien genügen. Ein Manager ist in der Lage, derartige Filter in Agenten einzurichten und die Filterkriterien festzulegen und zu bearbeiten. Das OMC OMC der Figur 1 weist für jeden der drei NMCs NMC1, NMC2 und NMC3 einen Filter FILTER1, FILTER2 und FILTER3 auf. Jede vom OMC OMC empfangene Notification NOTIFICATION wird von jedem der Filter FILTER1, FILTER2 und FILTER3 getestet und anschließend abhängig von dem Testergebnis entweder bei der Versendung als Ereignismeldung an den entsprechenden Manager adressiert oder nicht. Dadurch können die NMCs NMC1, NMC2 und NMC3 zu jeder Zeit die Informationsflüsse über die Schnittstelle zwischen dem OMC OMC und dem NMC NMC1, NMC2 oder NMC3 steuern.

Angesichts der großen Menge an Notifications NOTIFICATION, welche vom empfangen OMC OMC werden und als Ereignismeldung weiter zu versenden sind, versendet das OMC OMC Ereignismeldungen üblicherweise, ohne eine Bestätigung durch den jeweiligen Manager NMC1, NMC2 oder NMC3 abzuwarten, "non-confirmed mode" genannt. Bestätigungs-Nachrichten würden eine Verminderung der Leistungsfähigkeit der Schnittstelle und somit des gesamten Managementnetzes zur Folge haben. Ohne Bestätigungs-Nachrichten können Ereignismeldungen jedoch verloren gehen, ohne dass dieser Nachrichtenverlust entdeckt wird. Ein derartiger unentdeckter Nachrichtenverlust reduziert jedoch die Leistung des Managementnetzes und sollte daher vermieden werden.

Gemäß ITU T X.721 ("Structure of Management Information: Definition of Management Information") hat jede von einem Agenten erzeugte Notification, wie z.B. alarm, state change, attribute value change, eine standardisierte Syntax und enthält unter anderem einen Parameter "additionalInformation". In einer Multi-Manager Konfiguration ist jeder Manager durch eine Kennung, die sogenannte "managerReference" eindeutig identifizierbar. In einem CMIP-basierten System beispielsweise wird diese Kennung durch den Wert des Parameters "destination" des dem Manager zugeordneten Filters dargestellt.

Ein erfindungsgemäßes gesichertes Übertragungsverfahren läuft wie folgt ab: für jedes der angeschlossenen NMCs NMC1, NMC2 und NMC3 existiert im OMC OMC ein Zähler COUNTER1, COUNTER2 und COUNTER3, welcher die Anzahl der an das jeweilige NMC NMC1, NMC2 oder NMC3 versendeten, d.h. von den Filtern FILTER1, FILTER2 und FILTER3 durchgelassenen Ereignismeldungen angibt, bzw. entsprechende Einrichtungen COUNTER1, COUNTER2 und COUNTER3, welche für alle die managerspezifischen Zähler betreffenden Aufgaben zuständig sind. Zuerst wird für jede vom OMC OMC empfangen Notification NOTIFICATION von den Filtern FILTER1, FILTER2 und FILTER3 geprüft, ob sie an den jeweiligen NMC NMC1, NMC2 oder NMC3 adressiert werden soll. Ergibt diese Prüfung, dass die Notification NOTIFICATION durchgelassen werden soll, wird der jeweilige Zähler COUNTER1, COUNTER2 oder COUNTER3 des Managers um den Wert eins erhöht. In den oben beschriebenen Parameter "additionalInformation" wird das Wertepaar <managerReference, COUNTER> eingefügt. Dies wird für alle angeschlossenen NMCs NMC1, NMC2 und NMC3 durchgeführt, bevor die jeweilige Notification NOTIFICATION an die NMCs NMC1, NMC2 und NMC3 versendet wird.

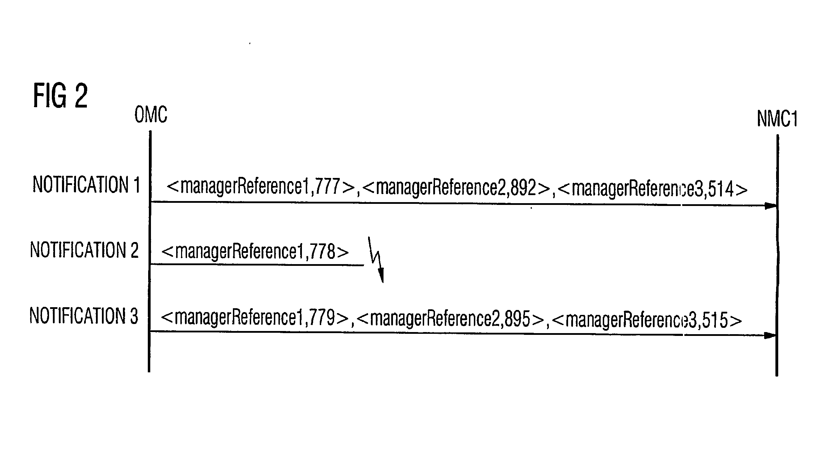

Figur 2 zeigt die Versendung dreier Notifications NOTIFICATION1, NOTIFICATION2 und NOTIFICATION3 vom OMC OMC an das erste NMC NMC1. Die erste Notification NOTIFICATION1 wird von allen drei Filtern FILTER1, FILTER2 und FILTER3 durchgelassen. Über dem die Übertragung der Notification NOTIFICATION1 in Form einer Ereignismeldung symbolisierenden Pfeil ist der Inhalt des Parameters "additionalInformation" dargestellt, welcher aus dem Wertepaar <managerReference1, 777> für das erste NMC NMC1, dem Wertepaar <managerReference2, 892> für das zweite NMC NMC2, und dem Wertepaar <managerReference3, 514> für das dritte NMC NMC3 besteht. Bei der nächsten Notification, welche als Ereignismeldung von dem OMC OMC an das erste NMC NMC1 versendet wird, handelt es sich um die Notification NOTIFICATION2. Diese wird zwar von dem Filter FILTER1 des ersten NMCs NMC1 durchgelassen, nicht jedoch von den Filtern FILTER2 und FILTER3 des zweiten und dritten NMCs NMC2 und NMC3. Der managerspezifische Zähler COUNTER2 und COUNTER3 des zweiten und dritten NMCs NMC2 und NMC3 wird daher der Notification NOTIFICATION2 nicht hinzugefügt, der Parameter "additionalInformation" besteht daher aus lediglich einem Wertepaar, nämlich <managerReference1, 778>. Da der Wert des Zählers COUNTER1 gegenüber der Notification NOTIFICATION1 lediglich um den Wert eins erhöht ist, kann dem Parameter "additionalInformation" der Notification NOTIFICATION2 entnommen werden, dass zwischenzeitlich keine weitere Notification von dem OMC OMC an das erste NMC NMC1 versendet wurde.

Aufgrund einer Störung der Kommunikation zwischen dem OMC OMC und dem ersten NMC NMC1 erreicht die Notification NOTIFICATION2 jedoch nicht das erste NMC NCM1, durch ein Blitzsymbol in dem die Übertragung der Notification NOTIFICATION2 in Form einer Ereignismeldung symbolisierenden Pfeil symbolisiert. Eine folgende Notification NOTIFICATION3 wird von jedem der Filter FILTER1, FILTER2 und FILTER3 der drei NMCs NMC1, NMC2 und NMC3 hindurchgelassen. Der Parameter "additionalInformation" der Notification NOTIFICATION3 enthält das Wertepaar <managerReference1, 779> für das erste NMC NMC1, das Wertepaar <managerReference2, 895> für das zweite NMC NMC2, und das Wertepaar <managerReference3, 515> für das dritte NMC NMC3. Dem Zähler COUNTER1 des ersten NMCs NMC1, welcher für die Notification NOTIFICATION3 den Wert 779 aufweist, kann entnommen werden, dass das OMC OMC dem ersten NMC NMC1 seit der Versendung der Notification NOTIFICATION2 keine weitere Ereignismeldung gesendet hat, dem Zähler COUNTER2 des zweiten NMCs NMC2, welcher für die Notification NOTIFICATION3 den Wert 895 aufweist, kann entnommen werden, dass das OMC OMC dem zweiten NMC NMC2 seit der Versendung der Notification NOTIFICATION1 zwei weitere Ereignismeldung mit Werten des Zählers COUNTER2 von 893 und 894 gesendet hat -in Figur 2 nicht dargestellt, da Figur 2 den Nachrichtenfluss zwischen dem OMC OMC und dem ersten NMC NMC1 aufzeigt-, und dem Zähler COUNTER3 des dritten NMCs NMC3, welcher für die Notification NOTIFICATION3 den Wert 515 aufweist, kann entnommen werden, dass das OMC OMC dem dritten NMC NMC3 seit der Versendung der Notification NOTIFICATION1 keine weitere Ereignismeldung gesendet hat.

Beim Empfang einer jeden Ereignismeldung vergleicht das jeweilige NMC NMC1, NMC oder NMC3 anhand des Parameters "additionalInformation" den Zählerwert der aktuell empfangenen Ereignismeldung mit dem Zählerwert der zuletzt empfangenen Ereignismeldung. Ist die Differenz größer als eins, erkennt das NMC NMC1, NMC oder NMC3 den Verlust von einer oder mehreren Ereignismeldungen. So kann das erste NMC NMC1 nach dem Empfang der Notification NOTIFICATION3 erkennen, dass nach der Übermittlung der Notification NOTIFICATION1 genau eine Notification verloren gegangen ist. Das erste NMC NMC1 kann daher eine Anforderung an das OMC OMC senden, welche das OMC auffordert, die verloren gegangene Notification mit dem Zählerwert 778 erneut zu versenden. Anhand einer Zuordnungstabelle ist das OMC OMC in der Lage, die vom ersten NMC NMC1 angeforderten Ereignismeldungen zu identifizieren und erneut an das anfordernde NMC NMC1 zu versenden.

Es ist auch möglich, dass eine derartige Anforderung nach verloren gegangenen Notifications periodisch, z.B. nach Ablauf eines im jeweiligen NMC konfigurierbaren Timers, an den Agenten gesendet wird, welche die Zählerwerte aller zwischenzeitlich verloren gegangenen Notifications enthält.

Das beschriebene verfahren ermöglicht eine gesicherte Übertragung von Ereignismeldungen über Managementschnittstellen in einer Multi-Manager Konfiguration, ohne dass Empfangsbestätigungen durch die Manager versendet werden müssen. Das Verfahren ist unabhängig vom verwendeten Kommunikationsprotokoll und eignet sich sowohl für den Echtzeit-Betrieb als auch für Synchronisierungsprozesse zwischen Manager und Agenten. Weiterhin ist das Verfahren neben Mobilfunkkommunikationssystemen auf beliebige Telekommunikationsnetze anwendbar.

## Patentansprüche

1. Verfahren zum Betreiben eines Managementnetzes, umfassend einen Agenten (OMC), welcher Nachrichten (NOTIFICATION; NOTIFICATION1, NOTIFICATION2, NOTIFICATION3) an eine Mehrzahl an Managern (NMC1, NMC2, NMC3) versendet, bei welchem der Agent (OMC) vor der Versendung einer Nachricht (NOTIFICATION; NOTIFICATION1, NOTIFICATION2, NOTIFICATION3) prüft, an welchen oder welche Manager (NMC1, NMC2, NMC3) der Mehrzahl an Managern (NMC1, NMC2, NMC3) die Nachricht (NOTIFICATION; NOTIFICATION1, NOTIFICATION2, NOTIFICATION3) zu versenden ist,
**dadurch gekennzeichnet,**
**dass** der Agent (OMC) der Nachricht (NOTIFICATION; NOTIFICATION1, NOTIFICATION2, NOTIFICATION3) vor der Versendung für jeden Manager (NMC1, NMC2, NMC3) der Mehrzahl an Managern (NMC1, NMC2, NMC3), an welchen die Nachricht (NOTIFICATION; NOTIFICATION1, NOTIFICATION2, NOTIFICATION3) zu versenden ist, einen für den jeweiligen Manager (NMC1, NMC2, NMC3) spezifischen Zähler (COUNTER1, COUNTER2, COUNTER3) hinzufügt, welcher vom Agenten (OMC) von Nachricht (NOTIFICATION; NOTIFICATION1, NOTIFICATION2, NOTIFICATION3) zu Nachricht (NOTIFICATION; NOTIFICATION1, NOTIFICATION2, NOTIFICATION3), welche von dem Agenten (OMC) an den jeweiligen Manager (NMC1, NMC2, NMC3) zu versenden ist, geändert wird.

2. Verfahren nach Anspruch 1,
**dadurch gekennzeichnet,**
**dass** es sich bei dem Zähler (COUNTER1, COUNTER2, COUNTER3) um eine ganze Zahl handelt, welche von Nachricht (NOTIFICATION; NOTIFICATION1, NOTIFICATION2, NOTIFICATION3) zu Nachricht (NOTIFICATION; NOTIFICATION1, NOTIFICATION2, NOTIFICATION3), welche von dem Agenten (OMC) an den jeweiligen Manager (NMC1, NMC2, NMC3) zu versenden ist, um den Wert eins erhöht wird.

3. Verfahren nach Anspruch 2,
**dadurch gekennzeichnet,**
**dass** der Zähler (COUNTER1, COUNTER2, COUNTER3) die Anzahl an seit einem bestimmten Zeitpunkt von dem Agent (OMC) an den jeweiligen Manager (NMC1, NMC2, NMC3) gesendeten Nachrichten (NOTIFICATION; NOTIFICATION1, NOTIFICATION2, NOTIFICATION3) angibt.

4. Verfahren nach einem der Ansprüche 1 bis 3,
**dadurch gekennzeichnet,**
**dass** ein Manager (NMC1, NMC2, NMC3) der Mehrzahl an Managern (NMC1, NMC2, NMC3), welcher die Nachricht (NOTIFICATION; NOTIFICATION1, NOTIFICATION2, NOTIFICATION3) mit dem für diesen Manager (NMC1, NMC2, NMC3) spezifischen Zähler (COUNTER1, COUNTER2, COUNTER3) empfängt, diesen Zähler (COUNTER1, COUNTER2, COUNTER3) mit einem zuvor empfangenen für diesen Manager (NMC1, NMC2, NMC3) spezifischen Zähler vergleicht.

5. Verfahren nach Anspruch 4,
**dadurch gekennzeichnet,**
**dass** der Manager (NMC1, NMC2, NMC3) auf den Vergleich der Zähler hin mindestens eine vom Agenten (OMC) zuvor versendete und vom Manager (NMC1, NMC2, NMC3) nicht empfangene Nachricht vom Agenten (OMC) anfordert.

6. Verfahren nach einem der Ansprüche 1 bis 5,
**dadurch gekennzeichnet,**
**dass** der Zähler (COUNTER1, COUNTER2, COUNTER3) der Nachricht (NOTIFICATION; NOTIFICATION1, NOTIFICATION2, NOTIFICATION3) in Kombination mit Identifikationsinformationen (managerReference1, managerReference2, managerReference3) des jeweiligen Managers (NMC1, NMC2, NMC3) hinzugefügt wird.

7. Agent (OMC) zum Versenden von Nachrichten (NOTIFICATION; NOTIFICATION1, NOTIFICATION2, NOTIFICATION3) an eine Mehrzahl von Managern (NMC1, NMC2, NMC3) eines Managementnetzes,
mit Mitteln (FILTER1, FILTER2, FILTER3) zum Prüfen vor der Versendung einer Nachricht (NOTIFICATION; NOTIFICATION1, NOTIFICATION2, NOTIFICATION3), an welchen oder welche Manager (NMC1, NMC2, NMC3) der Mehrzahl an Managern (NMC1, NMC2, NMC3) die Nachricht (NOTIFICATION; NOTIFICATION1, NOTIFICATION2, NOTIFICATION3) zu versenden ist,
**dadurch gekennzeichnet,**
**dass** der Agent (OMC) weiterhin aufweist:
Mittel (COUNTER1, COUNTER2, COUNTER3) zum Hinzufügen für jeden Manager (NMC1, NMC2, NMC3) der Mehrzahl an Managern (NMC1, NMC2, NMC3), an welchen die Nachricht (NOTIFICATION; NOTIFICATION1, NOTIFICATION2, NOTIFICATION3) zu versenden ist, eines für den jeweiligen Manager (NMC1, NMC2, NMC3) spezifischen Zählers vor der Versendung der Nachricht (NOTIFICATION; NOTIFICATION1, NOTIFICATION2, NOTIFICATION3), und
Mittel (COUNTER1, COUNTER2, COUNTER3) zum Ändern des Zählers von Nachricht (NOTIFICATION; NOTIFICATION1, NOTIFICATION2, NOTIFICATION3) zu Nachricht (NOTIFICATION; NOTIFICATION1, NOTIFICATION2, NOTIFICATION3), welche von dem Agenten (OMC) an den jeweiligen Manager (NMC1, NMC2, NMC3) zu versenden ist.

## Claims

1. Method for operating a management network, comprising an agent (OMC) which sends notifications (NOTIFICATION; NOTIFICATION1, NOTIFICATION2, NOTIFICATION3) to a plurality of managers (NMC1, NMC2, NMC3), wherein the agent (OMC) checks, prior to sending a notification (NOTIFICATION; NOTIFICATION1, NOTIFICATION2, NOTIFICATION3), to which manager or managers (NMC1, NMC2, NMC3) of the plurality of managers (NMC1, NMC2, NMC3) the notification (NOTIFICATION; NOTIFICATION1, NOTIFICATION2, NOTIFICATION3) is to be sent,
**characterised in that**
prior to sending, for each manager (NMC1, NMC2, NMC3) of the plurality of managers (NMC1, NMC2, NMC3) to which the notification (NOTIFICATION; NOTIFICATION1, NOTIFICATION2, NOTIFICATION3) is to be sent, the agent (OMC) adds a counter (COUNTER1, COUNTER2, COUNTER3) which is specific to the respective manager (NMC1, NMC2, NMC3) to the notification (NOTIFICATION; NOTIFICATION1, NOTIFICATION2, NOTIFICATION3) and which is modified by the agent (OMC) from notification (NOTIFICATION; NOTIFICATION1, NOTIFICATION2, NOTIFICATION3) to notification (NOTIFICATION; NOTIFICATION1, NOTIFICATION2, NOTIFICATION3) which is to be sent by the agent (OMC) to the respective manager (NMC1, NMC2, NMC3).

2. Method according to claim 1,
**characterised in that**
the counter (COUNTER1, COUNTER2, COUNTER3) is a whole number which is incremented by the value one from notification (NOTIFICATION; NOTIFICATION1, NOTIFICATION2, NOTIFICATION3) to notification (NOTIFICATION; NOTIFICATION1, NOTIFICATION2, NOTIFICATION3) which is to be sent by the agent (OMC) to the respective manager (NMC1, NMC2, NMC3).

3. Method according to claim 2,
**characterised in that**
the counter (COUNTER1, COUNTER2, COUNTER3) indicates the number of notifications (NOTIFICATION; NOTIFICATION1, NOTIFICATION2, NOTIFICATION3) sent since a specific time by the agent (OMC) to the respective manager (NMC1, NMC2, NMC3).

4. Method according to one of claims 1 to 3,
**characterised in that**
a manager (NMC1, NMC2, NMC3) of the plurality of managers (NMC1, NMC2, NMC3) which receives the notification (NOTIFICATION; NOTIFICATION1, NOTIFICATION2, NOTIFICATION3) with the counter (COUNTER1, COUNTER2, COUNTER3) specific to said manager (NMC1, NMC2, NMC3) compares said counter (COUNTER1, COUNTER2, COUNTER3) with a previously received counter specific to said manager (NMC1, NMC2, NMC3).

5. Method according to claim 4,
**characterised in that**
the manager (NMC1, NMC2, NMC3), following the comparison of the counters, requests at least one notification previously sent by the agent (OMC) and not received by the manager (NMC1, NMC2, NMC3) from the agent (OMC).

6. Method according to one of claims 1 to 5,
**characterised in that**
the counter (COUNTER1, COUNTER2, COUNTER3) is added to the notification (NOTIFICATION; NOTIFICATION1, NOTIFICATION2, NOTIFICATION3) in combination with identification information (managerReference1, managerReference2, managerReference3) of the respective manager (NMC1, NMC2, NMC3).

7. Agent (OMC) for sending notifications (NOTIFICATION; NOTIFICATION1, NOTIFICATION2, NOTIFICATION3) to a plurality of managers (NMC1, NMC2, NMC3) of a management network,
having means (FILTER1, FILTER2, FILTER3) for checking, prior to the sending of a notification (NOTIFICATION; NOTIFICATION1, NOTIFICATION2, NOTIFICATION3), to which manager or managers (NMC1, NMC2, NMC3) of the plurality of managers (NMC1, NMC2, NMC3) the notification (NOTIFICATION; NOTIFICATION1, NOTIFICATION2, NOTIFICATION3) is to be sent,
**characterised in that**
the agent (OMC) additionally has:
means (COUNTER1, COUNTER2, COUNTER3) for adding, prior to the sending of the notification (NOTIFICATION; NOTIFICATION1, NOTIFICATION2, NOTIFICATION3), for each manager (NMC1, NMC2, NMC3) of the plurality of managers (NMC1, NMC2, NMC3) to which the notification (NOTIFICATION; NOTIFICATION1, NOTIFICATION2, NOTIFICATION3) is to be sent, a counter specific to the respective manager (NMC1, NMC2, NMC3), and
means (COUNTER1, COUNTER2, COUNTER3) for modifying the counter from notification (NOTIFICATION; NOTIFICATION1, NOTIFICATION2, NOTIFICATION3) to notification (NOTIFICATION; NOTIFICATION1, NOTIFICATION2, NOTIFICATION3) which is to be sent by the agent (OMC) to the respective manager (NMC1, NMC2, NMC3).

## Revendications

1. Procédé pour exploiter un réseau de gestion, comprenant un agent (OMC), qui envoie des messages (NOTIFICATION ; NOTIFICATION1, NOTIFICATION2, NOTIFICATION3) à une pluralité de gestionnaires (NMC1, NMC2, NMC3), dans lequel l'agent (OMC) vérifie avant l'envoi d'un message (NOTIFICATION ; NOTIFICATION1, NOTIFICATION2, NOTIFICATION3) à quel gestionnaire ou à quels gestionnaires (NMC1, NMC2, NMC3) de la pluralité de gestionnaires (NMC1, NMC2, NMC3) le message (NOTIFICATION ; NOTIFICATION1, NOTIFICATION2, NOTIFICATION3) doit être envoyé, **caractérisé en ce que** l'agent (OMC) ajoute au message (NOTIFICATION ; NOTIFICATION1, NOTIFICATION2, NOTIFICATION3) avant l'envoi pour chaque gestionnaire (NMC1, NMC2, NMC3) de la pluralité de gestionnaires (NMC1, NMC2, NMC3), auquel le message (NOTIFICATION ; NOTIFICATION1, NOTIFICATION2, NOTIFICATION3) doit être envoyé, un compteur (COUNTER1, COUNTER2, COUNTER3) spécifique pour le gestionnaire (NMC1, NMC2, NMC3) respectif, qui est modifié par l'agent (OMC) de message (NOTIFICATION ; NOTIFICATION1, NOTIFICATION2, NOTIFICATION3) à message (NOTIFICATION ; NOTIFICATION1, NOTIFICATION2, NOTIFICATION3), qui doit être envoyé par l'agent (OMC) au gestionnaire (NMC1, NMC2, NMC3) respectif.

2. Procédé selon la revendication 1, **caractérisé en ce que**, en ce qui concerne le compteur (COUNTER1, COUNTER2, COUNTER3), il s'agit d'un nombre entier qui est augmenté de la valeur un de message (NOTIFICATION ; NOTIFICATION1, NOTIFICATION2, NOTIFICATION3) à message (NOTIFICATION ; NOTIFICATION1, NOTIFICATION2, NOTIFICATION3), qui doit être envoyé par l'agent (OMC) au gestionnaire (NMC1, NMC2, NMC3) respectif.

3. Procédé selon la revendication 2, **caractérisé en ce que** le compteur (COUNTER1, COUNTER2, COUNTER3) indique le nombre de messages (NOTIFICATION ; NOTIFICATION1, NOTIFICATION2, NOTIFICATION3) envoyés depuis un moment défini par l'agent au gestionnaire (NMC1, NMC2, NMC3) respectif.

4. Procédé selon l'une quelconque des revendications 1 à 3, **caractérisé en ce qu'**un gestionnaire (NMC1, NMC2, NMC3) de la pluralité de gestionnaires (NMC1, NMC2, NMC3), qui reçoit le message (NOTIFICATION ; NOTIFICATION1, NOTIFICATION2, NOTIFICATION3) avec le compteur (COUNTER1, COUNTER2, COUNTER3) spécifique pour ce gestionnaire (NMC1, NMC2, NMC3), compare ce compteur (COUNTER1, COUNTER2, COUNTER3) avec un compteur reçu auparavant et spécifique pour ce gestionnaire (NMC1, NMC2, NMC3).

5. Procédé selon la revendication 4, **caractérisé en ce que** le gestionnaire ((NMC1, NMC2, NMC3) demande à l'agent (OMC) suite à la comparaison des compteurs, au moins un message qui a été envoyé auparavant par l'agent (OMC) et n'a pas été reçu par le gestionnaire (NMC1, NMC2, NMC3).

6. Procédé selon l'une quelconque des revendications 1 à 5, **caractérisé en ce que** le compteur (COUNTER1, COUNTER2, COUNTER3) est ajouté au message (NOTIFICATION ; NOTIFICATION1, NOTIFICATION2, NOTIFICATION3) en combinaison avec des informations d'identification (managerReference1, managerReference2, managerReference3) du gestionnaire (NMC1, NMC2, NMC3) respectif.

7. Agent (OMC) pour l'envoi de messages (NOTIFICATION ; NOTIFICATION1, NOTIFICATION2, NOTIFICATION3) à une pluralité de gestionnaires (NMC1, NMC2, NMC3) d'un réseau de gestion, comprenant des moyens (FILTER1, FILTER2, FLITER3) pour vérifier avant l'envoi d'un message (NOTIFICATION ; NOTIFICATION1, NOTIFICATION2, NOTIFICATION3) à quel gestionnaire ou quels gestionnaires (NMC1, NMC2, NMC3) de la pluralité de gestionnaires (NMC1, NMC2, NMC3) le message (NOTIFICATION ; NOTIFICATION1, NOTIFICATION2, NOTIFICATION3) doit être envoyé, **caractérisé en ce que** l'agent (OMC) présente également des moyens (COUNTER1, COUNTER2, COUNTER3) pour ajouter pour chaque gestionnaire (NMC1, NMC2, NMC3) de la pluralité de gestionnaires (NMC1, NMC2, NMC3), auquel le message (NOTIFICATION ; NOTIFICATION1, NOTIFICATION2, NOTIFICATION3) doit être envoyé, un compteur spécifique pour le gestionnaire (NMC1, NMC2, NMC3) respectif avant l'envoi du message (NOTIFICATION ; NOTIFICATION1, NOTIFICATION2, NOTIFICATION3), et des moyens (COUNTER1, COUNTER2, COUNTER3) pour la modification du compteur de message (NOTIFICATION ; NOTIFICATION1, NOTIFICATION2, NOTIFICATION3) à message (NOTIFICATION ; NOTIFICATION1, NOTIFICATION2, NOTIFICATION3), qui doit être envoyé par l'agent (OMC) au gestionnaire (NMC1, NMC2, NMC3) respectif.
